# EUROPEAN PATENT SPECIFICATION

(11) **EP 4 138 096 B1**
(45) Date of publication and mention of the grant of the patent: **03.12.2025**
(21) Application number: 22765383.9
(22) Date of filing: 16.06.2022
(51) Int. Cl.: H01B 1/22, H01B 1/16, C09D 11/52, C08K 5/5313, B33Y 70/10, C08K 3/08

(54) **NANOPARTICLE COPPER PASTE SUITABLE FOR HIGH-PRECISION DIRECT-WRITE 3D PRINTING, AND PREPARATION AND USE THEREOF**
NANOPARTIKEL-KUPFERPASTE FÜR HOCHPRÄZISEN 3D-DIREKTSCHREIBDRUCK SOWIE HERSTELLUNG UND VERWENDUNG DAVON
PÂTE DE CUIVRE NANOPARTICULAIRE APPROPRIÉE POUR UNE IMPRESSION 3D À ÉCRITURE DIRECTE DE HAUTE PRÉCISION, ET SA PRÉPARATION ET SON UTILISATION

(30) Priority: 18.06.2021 CN 202110681236
(43) Date of publication of application: 22.02.2023
(73) Proprietor: ENOVATE3D (HANGZHOU) TECHNOLOGY DEVELOPMENT CO., LTD., Hangzhou, Zhejiang 310051 (CN)
(72) Inventor: CHEN, Xiaopeng, Hangzhou Zhejiang 310051 (CN)
(74) Representative: Fezzardi, Antonio
(86) International application number: PCT/CN2022/099086
(87) International publication number: WO 2022/262794

(56) References cited:
- EP-A1- 3 712 904
- WO-A1-2018/140226
- CN-A- 105 328 206
- CN-A- 105 632 587
- CN-A- 105 802 344
- CN-A- 108 133 768
- CN-A- 113 362 984
- JP-A- 2017 157 531
- KR-A- 20150 070 695

## Description

### TECHNICAL FIELD

The present disclosure relates to conductive paste, in particular to a copper nanoparticle paste suitable for high-precision direct-writing 3D printing, and preparation and application thereof.

### BACKGROUND ART

Compared with a traditional technology, the metal 3D printing technology shows incomparable advantages in shortening the development and implementation cycles of new products, forming more complex structures efficiently, realizing integrated and lightweight design, achieving excellent mechanical properties, etc. At present, silver nanoparticles are applied most widely in the field of the metal 3D printing technology, since the silver nanoparticles have the characteristics of easy sintering, high electrical conductivity, anti-oxidation and the like, and accordingly perform well in metal 3D printing. However, silver materials, as raw materials for metal 3D printing, are high in price, which is a major critical defect, and greatly limits the development and application of a metal 3D printing technology.

By contrast, copper materials are lower in price than that of the silver materials, having similar electrical conductivity to the silver materials. Copper nanomaterials are prone to be oxidized in air atmosphere, and accordingly the surface of the copper nanoparticles is prone to be oxidized into CuO or Cu2O in the preparation and storage processes of copper paste, resulting in significant reduction in the electrical conductivity of the materials, which greatly limits the application of the copper paste in the field of 3D printing. Thus, a growing number of scientific research teams work on studying copper nanoparticles and corresponding copper paste suitable for metal 3D printing.

For example, CN104505137A "CONDUCTIVE COPPER PASTE AND PREPARATION METHOD AND APPLICATION THEREOF" published by Nanjing Tech University provided a preparation method of conductive copper paste, and in this method, one of oxalic acid, ascorbic acid or glucose is added in the preparation of the copper paste as a reducing agent; and in CN106981324B "COPPER CONDUCTIVE PASTE AND PREPARATION METHOD AND APPLICATION THEREOF", copper oxides are reduced in a sintering process by adding a stabilizer to a system to obtain a conductive circuit with a low copper oxide content, wherein the stabilizer includes citric acid, ascorbic acid, glutaraldehyde and the like. However, micron-sized copper particles prepared by such reducing agent or stabilizer still cannot meet the requirements of high-precision direct-writing 3D printing; in other words, in the high-precision direct-writing 3D printing, especially for printing with the line width of smaller than 10 µm, 100 nm or smaller-size paste is often required for materials, while the smaller the size of the copper particles is, the higher the corresponding activity they will get, and consequently the copper particles are more prone to be oxidized. The preparation and protection of nanoscale copper paste cannot be realized in the corresponding prior art. In addition, the reducing agent or stabilizer added to such copper paste has a limited protective effect on the copper nanoparticles. After storage for more than one week, as the surface may be still oxidized completely, the problem of a significant increase in resistance after sintering will be caused.

Specifically, by taking "the ascorbic acid" as the reducing agent as an example, although the ascorbic acid has a certain reducibility, it is an acid in nature; and the copper atom reactivity on the surface of nano-copper may be very high, and therefore the surface of the copper nanoparticles may be broken down by the ascorbic acid (similar to a chemical reaction between reactive metals (such as iron and acids) in a long-time process, resulting in a significant decrease in the stability of the copper nanoparticles. In addition, the ascorbic acid actually plays a role in reduction in that the ascorbic acid may be broken down to generate carbon monoxide at high temperature, but the carbon monoxide is a gas, and is in incomplete contact with the surface of the copper nanoparticles in an actual sintering process, which results in poor reduction effect, and failure in the preparation and protection of the nanoscale copper particles. Moreover, the gas generated by high-temperature decomposition may further result in non-compactness of a copper wire after sintering, which may affect the electrical conductivity, and thus, the copper nanoparticles are unsuitable for the high-precision direct-writing 3D printing properly.

Patent Document CN 108133768 A does also disclose a conductive paste suitable to be used in high-precision direct writing 3D printing.

### TECHNICAL PROBLEM

The high-precision direct-writing 3D printing requires 100 nm sized copper nanoparticles as raw materials, while the smaller the size of the copper particles is, the higher the corresponding activity they will get, and consequently the copper particles are more prone to be oxidized in the preparation and storage processes; and this core problem cannot be solved by the current technology for preparing the conductive copper paste, thereby limiting the application of the copper materials to the high-precision direct-writing 3D printing.

### TECHNICAL SOLUTION

The present disclosure is intended to provide copper nanoparticle paste suitable for high-precision direct-writing 3D printing, and preparation and application thereof. A triaryl phosphine compound or trialkyl phosphine compound is adopted as a reducing agent, and copper nanoparticles are prepared into oil-soluble paste containing epoxy resin; and thus, the problem that the copper nanoparticle paste is prone to be oxidized in the preparation and storage processes is solved, and the electrical conductivity of the coppernanoparticle paste is improved, to ensure that the coppernanoparticle paste is suitable for the high-precision direct-writing 3D printing.

In a first aspect, the technical solution provides copper nanoparticle paste suitable for high-precision direct-writing 3D printing. The copper nanoparticle paste includes the following raw material components in percentage by weight: 50% to 90% of copper powder, 7% to 40% of organic carrier, 0 to 2% of non-conductive filler, 1% to 20% of copper powder protective agent, wherein the organic carrier consists of epoxy resin accounting for 1% to 15% of raw materials, an organic solvent accounting for 5% to 25% of the raw materials and a curing agent accounting for 1% to 5% of the raw materials; and the sum of percentages of all the components of the raw materials is 100%.

In the solution, an average particle size of the selected copper powder is controlled to be 100 nm to 5 µm, and in this way, the benefit is that proper copper nanoparticles can be selected to prepare copper paste targeting at different requirements of printing line widths.

The copper powder protective agent is any one or a combination of the triaryl phosphine compound and the trialkyl phosphine compound, which is coordinated with the copper powder at room temperature and low temperature, and combined with oxygen atoms at high temperature to form a phosphine oxide compound.

Types of the epoxy resin are not limited, and the epoxy resin is thermoset epoxy resin, and may be any one or a combination of bisphenol A-type epoxy resin, E-44 epoxy resin and biphenoxy epoxy resin. In a reaction system, the epoxy resin is used for effectively isolating water molecules from environment to avoid damage to the copper nanoparticles depending on its hydrophobicity. The epoxy resin is easy to consolidate at high temperature, and may also improve the adhesion of the copper paste to a substrate effectively.

The organic solvent is any one or a combination of diethylene glycol monoethyl ether acetate, dibasic ester, isophoron, terpilenol or diethylene glycol monobutyl ether. In the reaction system, the organic solvent is used for dissolving the epoxy resin and the curing agent.

The curing agent is selected from a polythiol curing agent, a dicyandiamide curing agent and an anhydride curing agent. In the reaction system, the curing agent is used for enabling the epoxy resin to be quickly cured during high-temperature sintering, achieving the purpose of bonding with printing media properly, and therefore the adhesion between a copper wire and dielectric materials as well as the conductive stability is improved effectively.

A preparation method of the organic carrier is as follows: the epoxy resin is dissolved in the organic solvent, and heated to a first temperature and held for a period of time till the epoxy resin is completely dissolved in the organic solvent to obtain an initial carrier, and then the curing agent is added to the initial carrier, dispersed uniformly at high speed, heated to a second temperature and aged for a period of time to obtain an organic carrier. Wherein the first temperature is higher than the second temperature. In embodiments of the solution, the first temperature is controlled to 75°C-85°C, which may be 80°C, and the second temperature is controlled to 30°C-35°C.

The non-conductive filler is any one or a combination of ultrafine carbon powder, nano-graphene powder, bentonite or nano silicon dioxide powder, and is mainly used for regulating the viscosity and thixotropy of the conductive paste, so that the paste has a good rheological property, and the printing quality is improved. Namely, copper nanoparticle may be dispersed properly, and does not agglomerate during long-term storage.

In some specific embodiments, the copper nanoparticle paste includes the following raw material components in percentage by weight: 75% of copper powder, 14% of organic carrier, 10% of copper powder protective agent and 1% of non-conductive filler, wherein the organic carrier includes 5% of epoxy resin, 8% of organic solvent and 1% of curing agent.

In some specific embodiments, the copper nanoparticle paste includes the following raw material components in percentage by weight: 60% of copper powder, 23% of organic carrier, 15% of copper powder protective agent and 2% of non-conductive filler, wherein the organic carrier includes 10% of epoxy resin, 11% of organic solvent and 2% of curing agent.

In some specific embodiments, the copper nanoparticle paste includes the following raw material components in percentage by weight: 80% of copper powder, 15% of organic carrier and 5% of copper powder protective agent, wherein the organic carrier includes 4% of epoxy resin, 10% of organic solvent and 1% of curing agent.

In a second aspect, the solution provides the copper nanoparticle paste suitable for high-precision direct-writing 3D printing, including the following steps:
preparation of the organic carrier:
dissolving the epoxy resin in the organic solvent, heating to a first temperature and holding for a period of time till the epoxy resin is completely dissolved in the organic solvent to obtain an initial carrier, and then adding the curing agent to the initial carrier, dispersing at high speed uniformly, heating to a second temperature and aging for a period of time to obtain an organic carrier, wherein the first temperature is higher than the second temperature;
preparation of the copper paste:
mixing the copper powder, the copper powder protective agent, the non-conductive filler and the organic carrier and dispersing to obtain uniform initial paste; and
rolling the initial paste to a certain fineness, and filtering by a filter screen to obtain a finished copper paste product.

In the preparation method provided by the solution, the initial paste is rolled to the fineness of smaller than 1 µm, and filtered by a 10 µm to 20 µm filter screen to obtain the finished copper paste product. The holding time is 1 hour at the stage of obtaining the initial carrier, and 2 hours at the stage of obtaining the organic carrier to provide a sufficient aging time.

The copper nanoparticle paste prepared according to the above solution meets the requirement of high-precision direct-writing 3D printing with line widths of no smaller than 1 µm, and the electrical resistivity of the sintered copper wire is below 10 µΩ·cm after the finished copper paste product is stored in air atmosphere for 10 days.

In addition, the copper nanoparticle paste prepared according to the solution may be used for high-precision direct-writing 3D printing, as well as printing of high-precision wires of display panels, electronic components, photovoltaic panels and the like in the electronics industry.

The solution provides the copper nanoparticle paste suitable for high-precision direct-writing 3D printing, and the preparation and application thereof. The prepared copper nanoparticle paste is suitable for high-precision direct-writing 3D printing, and especially for printing with the line width of smaller than 10 µm, the required materials for high-precision direct-writing 3D printing are often 100 nm or smaller-size paste; however, the smaller particle size of the copper paste results in an increase in the surface activity of the copper particles, and consequently the surface of the copper particles is more prone to be oxidized; the copper nanoparticle paste is in contact with water and oxygen in air for a long time in a printing process, while the surface of the copper nanoparticles may be gradually oxidized due to long-time exposure to environment, which affects the final electrical conductivity.

Thus, the solution introduces the triaryl phosphine compound or trialkyl phosphine compound as the reducing agent in the preparation process of the copper paste, and the copper nanoparticles are prepared into the oil-soluble paste containing the epoxy resin; on the one hand, external water molecules may be isolated by the oil-soluble paste to avoid damage to the copper nanoparticles, and the adhesion of the copper paste to the substrate is improved; on the other hand, by means of the principle that the triaryl phosphine compound or trialkyl phosphine compound is coordinated with the surface of the copper nanoparticles, the efficiency of copper surface protection is improved compared with a conventional way of carbon monoxide gas contact; and the triaryl phosphine compound or trialkyl phosphine compound may be combined with the oxygen atoms to form a phosphine oxide compound, which does not affect the electrical conductivity formed during sintering of the copper nanoparticles. In other words, the reducing agent provided by the solution is stable at room temperature for a long time, and is not prone to be oxidized by oxygen in air. The reducing agent may effectively inhibit oxidation of the copper nanoparticles in the preparation and printing processes, to ensure the storage stability of the reducing agent in the paste; on the other hand, the reducibility of the reducing agent gradually increases with a rise in a sintering temperature in the sintering process, and the oxygen remaining in the sintering atmosphere and oxides formed by the oxidation of the surface of the copper nanoparticles may be consumed effectively; and therefore the prepared copper nanoparticle paste may be stored for a long time, and is not affected by external environment in the printing process.

The copper nanoparticle paste prepared according to the solution meets the requirement of high-precision direct-writing 3D printing with line widths of no smaller than 1 µm, the electrical resistivity of the sintered copper wire is below10 µΩ·cm after the finished copper paste product is stored in air atmosphere for 10 days. The triaryl phosphine compound or trialkyl phosphine compound may protect the surface of nano-copper from being oxidized at room temperature or lower temperature, and reduce oxidized cooper of the surface into pure copper, and therefore the sintered copper wire is high in electrical conductivity.

### Beneficial effects:

Compared with the prior art, the technical solution has the following characteristics and beneficial effects:
1. The copper nanoparticle paste suitable for high-precision direct-writing 3D printing is prepared to replace silver paste. Compared with the silver paste as materials, the copper nanoparticle paste can reduce the cost of printing materials greatly, and also ensure high electrical conductivity.
2. The copper nanoparticles are prepared into the oil-soluble paste containing the epoxy resin according to the solution. The epoxy resin as a hydrophobic material can isolate the water molecules to avoid damage to the copper nanoparticles, and as a material easy to cure at high temperature, can improve the adhesion property of the copper paste to the substrate.
3. In the solution, the triaryl phosphine compound or trialkyl phosphine compound is adopted as the reducing agent. The triaryl phosphine compound or trialkyl phosphine compound coordinated with the surface of the copper nanoparticles has an effect of protecting copper, and cannot react with the copper particles. In addition, the reducibility of the triaryl phosphine compound or trialkyl phosphine compound depends on whether the triaryl phosphine compound or trialkyl phosphine compound can be combined with the oxygen atoms to form the phosphine oxide compound, which does not affect the electrical conductivity formed during sintering of the copper nanoparticles. The electrical conductivity of the copper wire formed by the copper paste in direct-writing 3D printing in the prior art is obviously inferior to that of a copper wire formed by sintering after silk-screen printing.

### BRIEF DESCRIPTION OF THE DRAWINGS

FIG. 1 shows aging data of the electrical resistivity of a sintered copper film prepared from a finished copper paste product A in an embodiment 1 after storage for 1 week in 85°C/85RH environment.
FIG. 2 is a scanning electron microscope diagram of the finished copper paste product A having a size of 100-200 nm and prepared in the embodiment 1 of the solution before sintering.
FIG. 3 is a scanning electron microscope diagram of the finished copper paste product A having a size of 100-200 nm and prepared in the embodiment 1 of the solution after sintering.
FIG. 4 is a scanning electron microscope diagram of a finished copper paste product D having a size of 100-200 nm and prepared in a comparative example 1 of the solution before sintering.
FIG. 5 is a scanning electron microscope diagram of the finished copper paste product D having a size of 100-200 nm and prepared in the comparative embodiment 1 of the solution after sintering.

### PREFERRED IMPLEMENTATIONS OF THE PRESENT DISCLOSURE

The technical solutions in embodiments of the present disclosure will be clearly and completely described below with reference to drawings in embodiments of the present disclosure.

It is understandable that the term "one" should be understood as "at least one" or "one or a plurality of", namely that in one embodiment, the element may be one, while in other embodiments, the elements may be more. The term "one" should not be construed as a limitation to the number.

The implementations of the present disclosure will be explained below by specific embodiments. Test methods without indicating specific conditions in the following embodiments are generally based on conventional methods or conditions suggested by manufacturers.

### Embodiment 1

8 g of bisphenol A-type epoxy resin is weighed, dissolved in 15 g of butyl acetate solvent, heated to 80°C and held for 1 hour till the bisphenol A-type epoxy resin is dissolved completely to obtain an initial carrier; 1 g of anhydride curing agent is weighed, added to the initial carrier, dispersed by a high-speed disperser at high speed, heated to 30°C-35°C after being dispersed uniformly, and aged for 2 hours to obtain an organic carrier; 70 g of copper powder with a size of 100-200 nm, 5 g of triphenylphosphine as a reducing agent, 0.2 g of nano-graphene powder as a non-conductive filler, and 0.8 g of 50 nm silicon dioxide powder are weighed, fully mixed with the organic carrier in a mixer, and then dispersed by the high-speed disperser at high speed to obtain uniform initial paste; and the initial paste is rolled by a three-roll mill for 6 times till the fineness is less than 1 µm, and finally filtered by a 10 µm filter screen to obtain a finished copper paste product A.

### IMPLEMENTATIONS OF THE PRESENT DISCLOSURE

### Embodiment 2

6 g of E-44 epoxy resin is weighed, dissolved in 10 g of polyethylene glycol solvent, heated to 80°C and held for 1 hour till the E-44 epoxy resin is dissolved completely to obtain an initial carrier; 0.5 g of polythiol curing agent is weighed, added to the initial carrier, dispersed by a high-speed disperser at high speed, heated to 30°C-35°C after being dispersed uniformly, and aged for 2 hours to obtain an organic carrier; 70 g of copper powder with a size of 500-600 nm, 5 g of trioctylphosphine as a reducing agent, 0.2 g of nano-graphene powder as a non-conductive filler, and 0.8 g of 50 nm silicon dioxide powder are weighed, fully mixed with the organic carrier in a mixer, and then dispersed by the high-speed disperser at high speed to obtain uniform initial paste; and the initial paste is rolled by a three-roll mill for 6 times till the fineness is less than 1 µm, and finally filtered by a 10 µm filter screen to obtain a finished copper paste product B.

### Embodiment 3

5 g of biphenoxy epoxy resin is weighed, dissolved in 7 g of diethylene glycol ether acetate solvent, heated to 80°C and held for 1 hour till the biphenoxy epoxy resin is dissolved completely to obtain an initial carrier; 0.5 g of dicyandiamide curing agent is weighed, added to the initial carrier, dispersed by a high-speed disperser at high speed, heated to 30°C-35°C after being dispersed uniformly, and aged for 2 hours to obtain an organic carrier; 70 g of copper powder with a size of 1-2 µm, 5 g of tri-p-methylphenylphosphine as a reducing agent are weighed, fully mixed with the organic carrier in a mixer, and then dispersed by the high-speed disperser at high speed to obtain uniform initial paste; and the initial paste is rolled by a three-roll mill for 6 times till the fineness is less than 1 µm, and finally filtered by a 10 µm filter screen to obtain a finished copper paste product C.

### Comparative example 1:

8 g of bisphenol A-type epoxy resin is weighed, dissolved in 15 g of butyl acetate solvent, heated to 80°C and held for 1 hour till the bisphenol A-type epoxy resin is dissolved completely to obtain an initial carrier; 1 g of anhydride curing agent is weighed, added to the initial carrier, dispersed by a high-speed disperser at high speed, heated to 30°C-35°C after being dispersed uniformly, and aged for 2 hours to obtain an organic carrier; 70 g of copper powder with a size of 100-200 nm, 5 g of ascorbic acid as a reducing agent, 0.2 g of nano-graphene powder as a non-conductive filler, and 0.8 g of 50 nm silicon dioxide powder are weighed, fully mixed with the organic carrier in a mixer, and then dispersed by the high-speed disperser at high speed to obtain uniform initial paste; and the initial paste is rolled by a three-roll mill for 6 times till the fineness is less than 1 µm, and finally filtered by a 10 µm filter screen to obtain a finished copper paste product D.

### Comparative example 2:

24 g of butyl acetate as an organic carrier is weighed; 70 g of copper powder with a size of 100-200 nm, 5 g of triphenylphosphine as a reducing agent, 0.2 g of nano-graphene powder as a non-conductive filler, and 0.8 g of 50 nm silicon dioxide powder are weighed, fully mixed with the organic carrier in a mixer, and then dispersed by the high-speed disperser at high speed to obtain uniform initial paste; and the initial paste is rolled by a three-roll mill for 6 times till the fineness is less than 1 µm, and finally filtered by a 10 µm filter screen to obtain a finished copper paste product E.

### Measurement experiment of electrical resistivity:

The prepared conductive copper paste was printed on a corresponding substrate (such as a silicon chip) by a 3D printer, dried at 100°C, and then put into a furnace for sintering in nitrogen atmosphere at 300°C for 30 min, wherein a heating rate is 10°C/min from 30 to 300°C in a sintering process. The electrical resistivity of the cured conductive copper film obtained after sintering was tested by a four-probe resistance tester (Advance Riko, model: ZEM-3M10).

The obtained experimental results are shown in Table 1:

**Table 1 Measurement of electrical resistivity of finished copper paste product**

| Sample | Electrical resistivity µΩ·cm |
|---|---|
| Finished copper paste product A | 8.2 |
| Finished copper paste product B | 7.8 |
| Finished copper paste product C | 6.5 |
| Finished copper paste product D | >100 |
| Finished copper paste product E | >100 |

It can be seen from Table 1 that the electrical resistivity of the finished copper paste product A/B/C is far lower than that of the finished copper paste product D and the finished copper paste product E, which shows that the copper paste prepared under the conditions provided by the solution is higher in electrical conductivity.

### Measurement experiment of storage time:

In order to validate that the storage stability of the finished copper paste product developed by the patent may meet the requirement of practical commercial applications, different finished copper paste products are placed at room temperature for a certain time; and corresponding copper films are prepared after sintering according to the same technology above, and an electrical resistivity test is conducted.

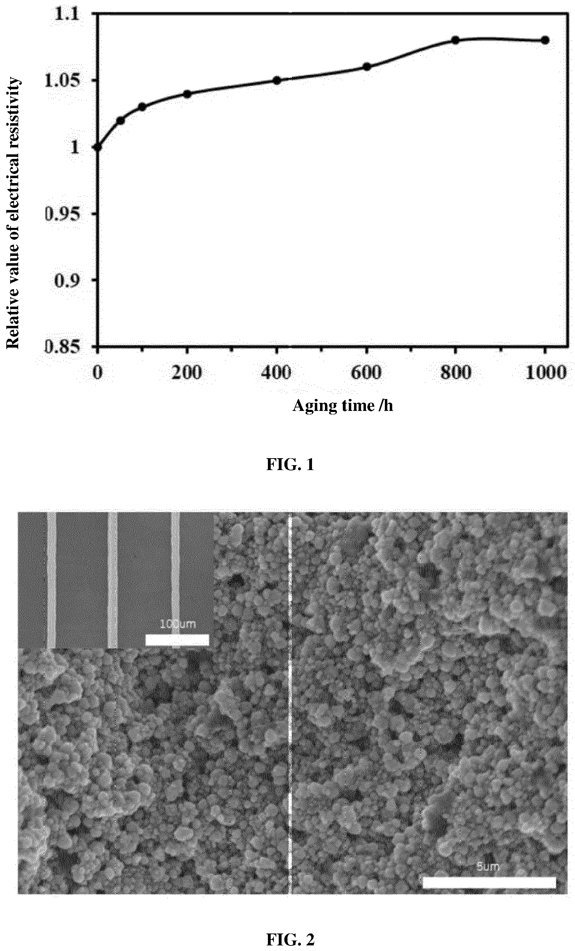

The obtained experimental results are shown in Table 2. The aging data of the sintered copper film on electrical resistivity in 85°C/85RH environment after storage of a finished copper paste product A for 10 days is shown in FIG. 1.

**Table 2 Relation between storage time and electrical resistivity of finished copper paste product**

| Storage time | Electrical resistivity µΩ·cm | | | | |
|---|---|---|---|---|---|
| | Finished copper paste product A | Finished copper paste product B | Finished copper paste product C | Finished copper paste product D | Finished copper paste product E |
| 0 day | 8.2 | 7.8 | 6.5 | >100 | >100 |
| 1 day | 8.5 | 8.0 | 6.8 | >100 | >100 |
| 3 day | 8.6 | 8.3 | 7.2 | >100 | >100 |
| 7 day | 9.0 | 8.7 | 7.5 | >100 | >100 |
| 10 day | 9.5 | 8.9 | 7.8 | >100 | >100 |

It can be seen from Table 2 that the stability of the finished copper paste product A/B/C during long-term storage is also higher, and the electrical resistivity of the sintered copper wire is below 10 µΩ·cm after storage of the finished copper paste product in air atmosphere for 10 days.

### Scanning electron microscope experiment:

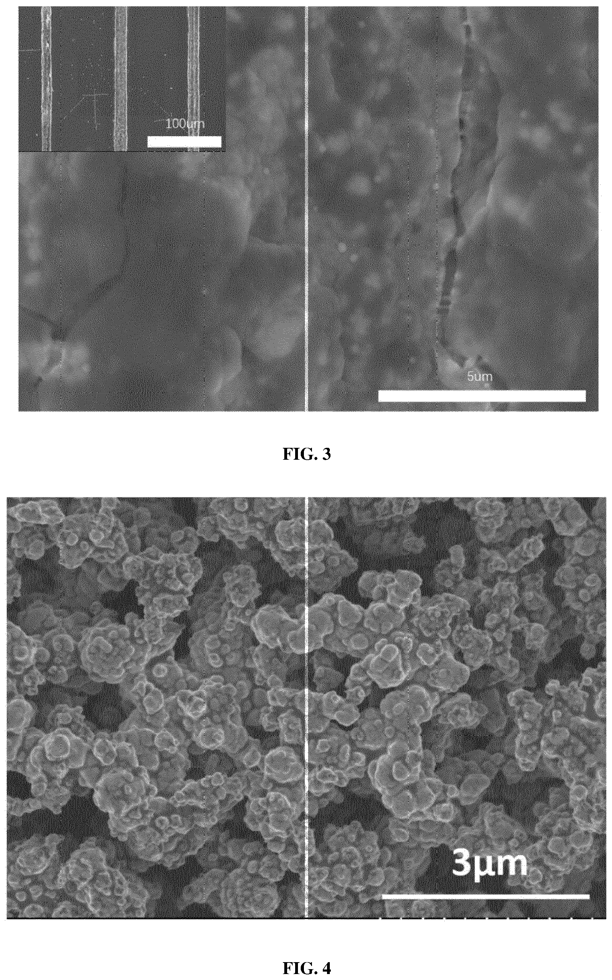

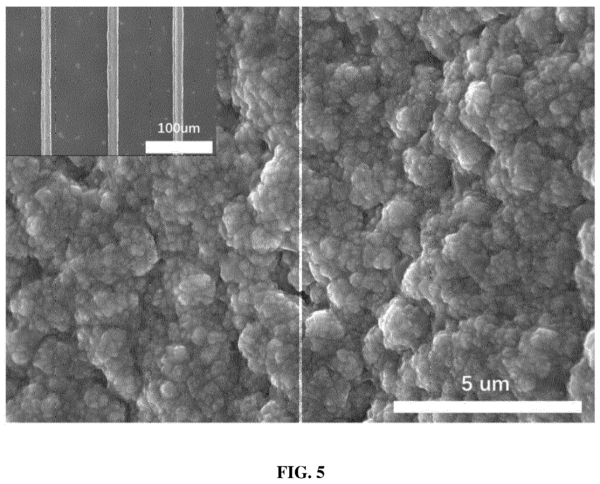

The finished copper paste product A obtained in the embodiment 1 and the finished copper paste product D obtained in the comparative example 1 serve as test samples. A scanning electron microscope diagram of the finished copper paste product A before sintering of copper paste and a scanning electron microscope diagram of the finished copper paste product A after sintering of the copper paste are shown in FIG. 2 and FIG. 3, and a scanning electron microscope diagram of the finished copper paste product D before sintering of the copper paste and a scanning electron microscope diagram of the finished copper paste product D after sintering of the copper paste are shown in FIG. 4 and FIG. 5. It can be obviously seen from the figures that the copper film formed after sintering of the finished copper paste product A is very compact, and the surface is smoother; correspondingly, CuO or Cu₂O is formed due to oxidation of the surface of the copper paste of the finished copper paste product D, so a compact copper film cannot be formed at the same sintering temperature; and therefore, obvious copper nanoparticles still can be seen from a scanning electron microscope, and consequently the electrical conductivity of the finished copper paste product D is obviously inferior to that of the finished copper paste product A after sintering.

## Claims

1. A copper nanoparticle paste suitable for high-precision direct-writing 3D printing, comprising the following raw material components in percentage by weight: 50% to 90% of copper powder, 7% to 40% of organic carrier, 1% to 20% of copper powder protective agent and 0 to 2% of non-conductive filler, wherein the organic carrier consists of epoxy resin accounting for 1% to 15% of the raw materials, an organic solvent accounting for 5% to 25% of the raw materials and a curing agent accounting for 1% to 5% of the raw materials; and the sum of percentages of all the components of the raw materials is 100%; wherein the copper powder protective agent is any one or a combination of a triaryl phosphine compound and a trialkyl phosphine compound, and is coordinated with the copper powder at 100°C below, and combined with oxygen atoms at 100°C or above to form a phosphine oxide compound.

2. The copper nanoparticle paste suitable for high-precision direct-writing 3D printing according to claim 1, wherein the copper powder is copper nanoparticles with a size of 50 nm to 5 µm.

3. The copper nanoparticle paste suitable for high-precision direct-writing 3D printing according to claim 1, wherein the copper powder is copper nanoparticles with a size of 50 nm to 500nm.

4. The copper nanoparticle paste suitable for high-precision direct-writing 3D printing according to claim 1, wherein the non-conductive filler is any one or a combination of ultrafine carbon powder, nano-graphene powder, bentonite and nano silicon dioxide powder.

5. A process for preparing the copper nanoparticle paste suitable for high-precision direct-writing 3D printing according to claim 1, comprising the following steps:
preparing the organic carrier: dissolving the epoxy resin in the organic solvent, heating to a first temperature and holding for a period of time, till the epoxy resin is completely dissolved in the organic solvent to obtain an initial carrier, and then adding the curing agent to the initial carrier, dispersing at high speed uniformly, heating to a second temperature and aging for a period of time to obtain the organic carrier, wherein the first temperature is higher than the second temperature;
preparing the copper paste: mixing the copper powder, the copper powder protective agent, the non-conductive filler and the organic carrier, and then, dispersing the resulting mixtures to obtain uniform initial paste; and rolling the initial paste to a certain fineness and filtering the initial paste by a filter screen to obtain a finished copper paste product.

6. The copper nanoparticle paste suitable for high-precision direct-writing 3D printing according to claim 1, wherein the epoxy resin is thermoset epoxy resin, and may be any one or a combination of bisphenol A-type epoxy resin, E-44 epoxy resin and biphenoxy epoxy resin.

7. The copper nanoparticle paste suitable for high-precision direct-writing 3D printing according to claim 1, wherein the curing agent may be any one or a combination of a polythiol curing agent, a dicyandiamide curing agent and an anhydride curing agent.

8. Application of the copper nanoparticle paste suitable for high-precision direct-writing 3D printing according to claim 1 in conformity to the requirement of high-precision direct-writing 3D printing with line widths of no smaller than 1 µm.

9. Application of the copper nanoparticle paste suitable for high-precision direct-writing 3D printing according to claim 8, wherein the electrical resistivity of the sintered copper wire is below 10 µΩ·cm after storage of the finished copper paste product in air atmosphere for 10 days.

## Patentansprüche

1. Eine Kupfer-Nanopartikel-Paste, geeignet für hochpräzises Direkt-Schreib-3D-Drucken, umfassend die folgenden Rohstoffkomponenten in Gewichtsprozent: 50 bis 90% Kupferpulver, 7 bis 40% organischer Träger, 1 bis 20% Kupferpulver-Schutzmittel und 0 bis 2 % nichtleitender Füllstoff, wobei der organische Träger aus Epoxidharz, das 1 bis 15 % der Rohstoffe ausmacht, einem organischen Lösungsmittel, das 5 bis 25 % der Rohstoffe ausmacht, und einem Härter, der 1 bis 5 % der Rohstoffe ausmacht, besteht; und die Summe der Prozentsätze aller Komponenten der Rohstoffe 100% beträgt; wobei das Kupferpulver-Schutzmittel eine Triarylphosphan-Verbindung, eine Trialkylphosphan-Verbindung oder eine Kombination davon ist, bei Temperaturen unter 100°C mit dem Kupferpulver koordiniert wird und bei Temperaturen von 100°C oder darüber mit Sauerstoffatomen zu einem Phosphanoxid verbunden wird.

2. Die Kupfer-Nanopartikel-Paste, geeignet für hochpräzises Direkt-Schreib-3D-Drucken, gemäß Anspruch 1, wobei das Kupferpulver Kupfer-Nanopartikel mit einer Größe von 50nm bis 5 µm ist.

3. Die Kupfer-Nanopartikel-Paste, geeignet für hochpräzises Direkt-Schreib-3D-Drucken, gemäß Anspruch 1, wobei das Kupferpulver Kupfer-Nanopartikel mit einer Größe von 50nm bis 500nm ist.

4. Die Kupfer-Nanopartikel-Paste, geeignet für hochpräzises hochpräzises Direkt-Schreib-3D-Drucken, gemäß Anspruch 1, wobei der nichtleitende Füllstoff ein Ultrafeinkohlenstoffpulver, Nano-Graphenpulver, Bentonit, Nanokieselsäurepulver oder eine Kombination davon ist.

5. Verfahren zur Herstellung der Kupfer-Nanopartikel-Paste, geeignet für hochpräzises Direkt-Schreib-3D-Drucken, gemäß Anspruch 1, umfassend die folgenden Schritte:
Herstellung des organischen Trägers: Lösen des Epoxidharzes im organischen Lösungsmittel, Erhitzen auf eine erste Temperatur und Halten für eine bestimmte Zeit, bis das Epoxidharz vollständig im organischen Lösungsmittel gelöst ist, um einen Ausgangsträger zu erhalten; anschließend Zugabe des Härters zum Ausgangsträger, gleichmäßiges Hochgeschwindigkeits-Dispergieren, Erhitzen auf eine zweite Temperatur und Altern für eine bestimmte Zeit, um den organischen Träger zu erhalten, wobei die erste Temperatur höher als die zweite Temperatur ist;
Herstellung der Kupferpaste: Mischen des Kupferpulvers, des Kupferpulver-Schutzmittels, des nichtleitenden Füllstoffs und des organischen Trägers, anschließend Dispergieren der resultierenden Mischung, um eine gleichmäßige Ausgangspaste zu erhalten; Walzen der Ausgangspaste auf eine bestimmte Feinheit und Filtern der Ausgangspaste durch ein Filtersieb, um ein fertiges Kupferpaste-Produkt zu erhalten.

6. Die Kupfer-Nanopartikel-Paste, geeignet für hochpräzises Direkt-Schreib-3D-Drucken, gemäß Anspruch 1, wobei das Epoxidharz ein duroplastisches Epoxidharz ist und eines oder eine Kombination von Bisphenol-A-Epoxidharz, E-44-Epoxidharz und Biphenoxy-Epoxidharz sein kann.

7. Die Kupfer-Nanopartikel-Paste, geeignet für hochpräzises Direkt-Schreib-3D-Drucken, gemäß Anspruch 1, wobei der Härter eines oder eine Kombination von Polythiol-Härter, Dicyandiamid-Härter und Anhydrid-Härter sein kann.

8. Verwendung der Kupfer-Nanopartikel-Paste, geeignet für hochpräzises Direkt-Schreib-3D-Drucken, gemäß Anspruch 1, in Übereinstimmung mit den Anforderungen des hochpräzisen Direkt-Schreib-3D-Druckens mit Linienbreiten von nicht weniger als 1 µm.

9. Verwendung der Kupfer-Nanopartikel-Paste, geeignet für hochpräzises Direkt-Schreib-3D-Drucken, gemäß Anspruch 8, wobei der elektrische Widerstand des gesinterten Kupferdrahtes nach Lagerung des fertigen Kupferpaste-Produkts in Luftatmosphäre für 10 Tage unter 10 µΩ·cm liegt.

## Revendications

1. Pâte de nanoparticules de cuivre conçue pour l'impression 3D à écriture directe de haute précision, comprenant des composants de matière première suivants en pourcentage en poids: 50 à 90 % en poids de poudre de cuivre, 7 à 40 % en poids de support organique, 1 à 20 % en poids d'agent protecteur de poudre de cuivre et 0 à 2 % en poids de charge non conductrice, dans laquelle le support organique est constitué de résine époxy représentant 1 à 15 % en poids des matières premières, d'un solvant organique représentant 5 à 25 % en poids des matières premières et d'un agent de durcissement représentant 1 à 5 % en poids des matières premières; et la somme des pourcentages de tous les composants des matières premières est de 100 %, dans laquelle l'agent protecteur de poudre de cuivre est l'un ou une combinaison d'un composé de triarylphosphine et d'un composé de trialkylphosphine, et est coordonné avec la poudre de cuivre à une température inférieure à 100 °C, et est combiné avec des atomes d'oxygène à une température supérieure ou égale à 100 °C pour former un composé d'oxyde de phosphine.

2. Pâte de nanoparticules de cuivre conçue pour l'impression 3D à écriture directe de haute précision selon la revendication 1, dans laquelle la poudre de cuivre est constituée de nanoparticules de cuivre d'une taille comprise entre 50 nm et 5 µm.

3. Pâte de nanoparticules de cuivre conçue pour l'impression 3D à écriture directe de haute précision selon la revendication 1, dans laquelle la poudre de cuivre est constituée de nanoparticules de cuivre d'une taille comprise entre 50 nm et 500 nm.

4. Pâte de nanoparticules de cuivre conçue pour l'impression 3D à écriture directe de haute précision selon la revendication 1, dans laquelle la charge non conductrice est l'une quelconque ou une combinaison de poudre de carbone ultrafine, de poudre de nanographène, de bentonite et de poudre de nano dioxyde de silicium.

5. Pâte de nanoparticules de cuivre conçue pour l'impression 3D à écriture directe de haute précision selon la revendication 1, comprenant les étapes suivantes consistant à :
préparation du support organique: dissoudre la résine époxy dans le solvant organique, chauffer à une première température et maintenir pendant un certain temps, jusqu'à ce que la résine époxy soit complètement dissoute dans le solvant organique afin d'obtenir un support initial, puis, ajouter l'agent de durcissement au support initial, disperser à grande vitesse de manière uniforme, chauffer à une seconde température et laisser vieillir pendant un certain temps afin d'obtenir le support organique, dans laquelle la première température est supérieure à la seconde température;
préparation de la pâte de cuivre: mélanger la poudre de cuivre, l'agent protecteur de poudre de cuivre, la charge non conductrice et le support organique, puis, disperser les mélanges obtenus afin d'obtenir une pâte initiale uniforme; et rouler la pâte initiale jusqu'à obtenir une certaine finesse et filtrer la pâte initiale à l'aide d'un tamis filtrant afin d'obtenir un produit fini sous forme de pâte de cuivre.

6. Pâte de nanoparticules de cuivre conçue pour l'impression 3D à écriture directe de haute précision selon la revendication 1, dans laquelle la résine époxy est une résine époxy thermodurcie et peut être l'une ou une combinaison de résine époxy de type bisphénol A, de résine époxy E-44 et de résine époxy biphényoxy.

7. Pâte de nanoparticules de cuivre conçue pour l'impression 3D à écriture directe de haute précision selon la revendication 1, dans laquelle l'agent de durcissement peut être l'un ou une combinaison d'un agent de durcissement polythiol, d'un agent de durcissement dicyandiamide et d'un agent de durcissement anhydride.

8. Pâte de nanoparticules de cuivre conçue pour l'impression 3D à écriture directe de haute précision selon la revendication 1, conformément à l'exigence de l'impression 3D à écriture directe de haute précision avec des largeurs de ligne non inférieures à 1 µm.

9. Pâte de nanoparticules de cuivre conçue pour l'impression 3D à écriture directe de haute précision selon la revendication 8, dans laquelle la résistivité électrique du fil de cuivre fritté est inférieure à 10 µΩ·cm après stockage du produit fini de pâte de cuivre dans l'atmosphère pendant 10 jours.
